# DEMANDE DE BREVET EUROPEEN

(11) **EP 4 481 439 A1**
(43) Date de publication de la demande: **25.12.2024**
(21) Numéro de dépôt: 24182494.5
(22) Date de dépôt: 17.06.2024
(51) Int. Cl.: G01S 13/86, B64U 10/13, B64U 20/87, G01S 13/06, G01S 13/56, G01S 17/06, G01S 17/66

(54) **PROCÉDÉ ET SYSTÈME DE DÉTECTION D'UN APPAREIL VOLANT DANS UN ESPACE AÉRIEN**

(30) Priorité: 19.06.2023 FR 2306086
(71) Demandeur: CS Group - France, 92350 Le Plessis-Robinson (FR)
(72) Inventeur: SCHAFFNER, Nicolas, 91400 ORSAY (FR); HEURET, Damien, 92380 GARCHES (FR); PARIS, Bruno, 75014 PARIS (FR); VALIN, Tony, 92320 CHATILLON (FR); DE REGNAULD DE BELLESCIZE, Thomas, 77810 THOMERY (FR); FELECAN, Peter, 92440 BURES SUR YVETTE (FR)
(74) Mandataire: Argyma

(57) **Abrégé**

Un procédé de détection d'un appareil volant (3) dans un espace aérien (EA) par un système de détection (S), le système de détection (S) comprenant au moins une station au sol (1) et au moins un drone de suivi (2), le procédé comprenant des étapes consistant à détecter une position d'au moins un appareil volant (3) dans l'espace aérien (EA), ci-après « position cible » (PosC), transmettre la position cible (PosC) au drone de suivi (2), déplacer de manière automatique le drone de suivi (2) vers la position cible (PosC), détecter, par le drone de suivi (2), une position d'au moins un appareil volant (3) dans un voisinage du drone de suivi (2), ci-après « position locale » (PosL), transmettre la position locale (PosL) à la station au sol (1), et déterminer, par la station au sol (1), une position affinée à partir de la position locale (PosL).

## Description

### DOMAINE TECHNIQUE

La présente invention concerne le domaine de la défense aérienne, plus précisément un système de détection et d'interception d'un appareil volant.

Dans le cadre de la défense d'un site à protéger, il est nécessaire de repérer les menaces potentielles à longue portée, par exemple, des appareils volants (drones, etc.) qui sont généralement utilisés pour réaliser des missions de reconnaissance ou transporter des charges explosives. Détecter à longue portée les potentielles menaces est essentiel pour garantir la protection des infrastructures et des personnes du site à protéger.

Il est connu dans l'art antérieur d'utiliser un système de détection au sol comprenant un radar dirigé vers le ciel pour surveiller l'espace aérien autour du site à protéger. Un tel système de détection permet de détecter à longue portée les appareils volants dans l'espace aérien, mais n'offre pas une précision suffisante pour identifier et intercepter l'appareil volant détecté. Par exemple, un tel système de détection ne permet pas d'identifier à longue portée si l'appareil volant détecté est un ami ou un ennemi.

Par ailleurs, pour intercepter un appareil volant à longue portée, il est connu d'utiliser un brouilleur longue portée pour désorienter l'appareil volant. Malheureusement, ce type de brouilleur perturbe tous les appareils électroniques dans une large zone et peut entrainer des dégâts collatéraux sur des équipements amis ou civils. Une solution pour éliminer cet inconvénient serait d'utiliser un laser ou analogue pour l'interception de l'appareil volant. Néanmoins, une telle solution ne peut pas être mise en oeuvre à longue portée étant donné que la position détectée ne possède pas une précision suffisante.

L'invention vise ainsi à éliminer au moins certains de ces inconvénients, en proposant un nouveau système de détection et d'interception d'un appareil volant permettant une détection plus précise.

On connait dans l'art antérieur la demande de brevet US20170059692A1 qui enseigne un drone d'interception. On connait par l'article « (Barisic Antonella et AI) Multi-robot system for autonomous Cooperative Counter-UAS Missions : Design, Intégration and Field Testing" un système de surveillance avec des véhicules de surveillance au sol.

### PRESENTATION DE L'INVENTION

L'invention concerne un procédé de détection d'un appareil volant dans un espace aérien par un système de détection, le système de détection comprenant au moins une station au sol et au moins un drone de suivi, le procédé comprenant des étapes consistant à :
- Détecter, par la station au sol, une position d'au moins un appareil volant dans l'espace aérien, ci-après « position cible »,
- Transmettre, par la station au sol, la position cible au drone de suivi,
- Déplacer de manière automatique le drone de suivi vers la position cible,
- Détecter, par le drone de suivi, une position d'au moins un appareil volant dans un voisinage du drone de suivi, ci-après « position locale »,
- Transmettre, par le drone de suivi, la position locale à la station au sol, et
- Déterminer, par la station au sol, une position affinée à partir de la position locale.

Grâce à l'invention, on obtient une position locale grâce au drone de suivi qui permet de renforcer la précision. L'utilisation d'un drone de suivi permet d'assurer un suivi précis d'un appareil volant afin de pouvoir le localiser, l'identifier ou l'intercepter en cas de besoin. Toute menace aérienne est ainsi contenue de manière optimale.

De préférence, le procédé comprend une étape consistant à commander un dispositif d'interception de manière à ce qu'il cible l'appareil volant à la position affinée. L'utilisation d'une position affinée de grande précision permet avantageusement de mettre en oeuvre une interception ciblée sans risque de dégât collatéral.

Selon un aspect, la position affinée est affichée sur un écran d'affichage de la station au sol. Cela permet à un opérateur de visualiser avec précision la trajectoire de l'appareil volant et de connaître, à tout moment, sa position précise.

Selon un aspect, une position du drone de suivi est déterminée en continu par le drone de suivi et envoyée à la station au sol. Cela permet à l'opérateur de visualiser de manière rapide sur un dispositif d'affichage la situation aérienne pour s'assurer que l'appareil volant est sous contrôle.

Selon un aspect, la position affinée correspond à la position locale. Une telle position affinée est utilisée lorsque le drone de suivi réalise une détection de grande qualité, en particulier, au moyen d'un lidar.

Selon un aspect, la position affinée est déterminée à partir de la position cible et de la position locale, de préférence, à partir de la position cible, de la position locale et de la position du drone de suivi. L'utilisation de plusieurs mesures de position permet avantageusement de réduire les imprécisions.

Selon un aspect, la position cible est détectée et transmise au drone de suivi de manière continue. Cela permet au drone de suivi d'adapter sa trajectoire de manière dynamique lors du ralliement de l'appareil volant.

Selon un aspect, le procédé comprend une étape consistant à comparer une distance d'écartement, déterminée entre la position locale et la position cible, à un seuil de voisinage, le drone de suivi transmettant la position locale uniquement si la distance d'écartement est inférieure au seuil de voisinage.

Cela permet au drone de suivi d'écarter tout intrus ne correspondant pas à l'appareil volant détecté par la station au sol lors du ralliement de l'appareil volant.

Selon un aspect, le procédé comprend une étape de poursuite consistant à déplacer de manière automatique le drone de suivi en fonction de la position locale et d'un vecteur de détection défini entre le drone de suivi et l'appareil volant, de préférence, sans tenir compte de la position cible.

L'utilisation d'un vecteur de détection, obtenu de préférence par un lidar, permet de détecter la vitesse et/ou l'accélération de l'appareil volant, ce qui permet d'estimer sa trajectoire et, de préférence, de faciliter son ralliement même lorsque ce dernier est en mouvement.

L'invention concerne également un système de détection d'un appareil volant dans un espace aérien, le système de détection comprenant au moins une station au sol et au moins un drone de suivi,
- la station au sol étant configurée pour :
   - détecter une position d'au moins un appareil volant dans l'espace aérien, ci-après « position cible »,
   - transmettre la position cible au drone de suivi,
- le drone de suivi étant configuré pour se déplacer de manière automatique vers la position cible,
- le drone de suivi étant configuré pour :
   - détecter une position d'au moins un appareil volant dans un voisinage du drone de suivi, ci-après « position locale »,
   - transmettre la position locale à la station au sol,
- la station au sol étant configurée pour :
   - déterminer une position affinée à partir de la position locale.

Selon un aspect, la station au sol comprend un dispositif de surveillance pour détecter la position cible, en particulier, un radar longue portée.

Selon un aspect, le drone de suivi comporte un dispositif de détection, de préférence, un lidar.

Un lidar permet une détection fiable aussi bien de nuit que sur une cible noire. Son fonctionnement en trois dimensions permet de déterminer une distance précise mais également les vitesses et les accélérations, ce qui permet de faciliter la poursuite de l'appareil volant par le drone.

Selon un aspect, le lidar possède un angle d'ouverture horizontal supérieur à 70 degrés et un angle d'ouverture vertical supérieur à 70 degrés.

Selon un aspect, le drone de suivi comporte un module de navigation configuré pour :
- Comparer une distance d'écartement, déterminé entre la position locale et la position cible, à un seuil de voisinage,
- Transmettre la position locale uniquement si la distance d'écartement est inférieure au seuil de voisinage.

Selon un aspect, le drone de suivi comporte un dispositif de capture d'images configuré pour transmettre en continu les images capturées à la station au sol. Cela permet d'identifier visuellement l'appareil volant.

Selon un aspect, le système comporte un dispositif d'interception, afin d'intercepter l'appareil volant à la position affinée. De préférence, le dispositif d'interception est monté sur le drone de suivi. Cela permet ainsi une interception réactive de manière locale.

De préférence, le dispositif d'interception est un brouilleur faible portée.

L'invention concerne également un drone aérien comportant un brouilleur faible portée. Selon un aspect, la ou les fréquences brouillées par le brouilleur faible portée sont paramétrables par un opérateur. Selon un aspect, la puissance de brouillage est paramétrable par un opérateur.

### PRESENTATION DES FIGURES

L'invention sera mieux comprise à la lecture de la description qui va suivre, donnée à titre d'exemple, et se référant aux figures suivantes, données à titre d'exemples non limitatifs, dans lesquelles des références identiques sont données à des objets semblables.
La figure 1 est une représentation schématique d'un système de détection selon l'invention.
La figure 2 est une représentation schématique d'un système de détection selon l'invention vu de haut, présentant une pluralité de drones de suivi.
La figure 3 est une représentation schématique d'un drone de suivi.
La figure 4 est une représentation schématique de l'entrée d'un appareil volant dans l'espace aérien du site à protéger.
La figure 5 est une représentation schématique d'une étape de ralliement de l'appareil volant par le drone de suivi.
La figure 6 est une représentation schématique d'une étape de détection au cours du ralliement de l'appareil volant.
La figure 7 est une représentation schématique d'un drone de suivi détectant un oiseau lors du ralliement de l'appareil volant.
La figure 8 est une représentation schématique d'un drone de suivi détectant l'appareil volant et transmettant la position de l'appareil volant à la station au sol.
La figure 9 est une représentation schématique de l'étape de poursuite de l'appareil volant par le drone de suivi.
La figure 10 est une représentation schématique d'un drone de suivi recevant un ordre d'interception et activant un brouilleur faible portée pour intercepter l'appareil volant.

Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE DE L'INVENTION

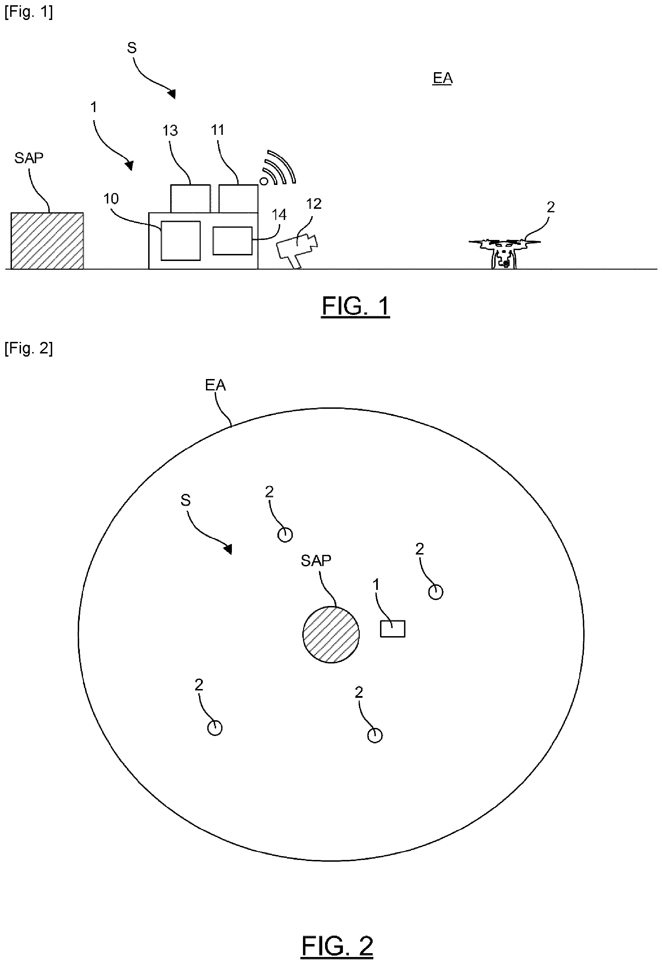

L'invention va être présentée dans un contexte militaire pour assurer la défense d'un site à protéger SAP comme illustré aux figures 1 et 2. Le site à protéger SAP peut se présenter sous diverses formes, par exemple, un camp militaire, un bâtiment officiel, une enceinte de loisirs, etc. Il est important d'assurer la sécurité des biens et des personnes dans ledit site à protéger SAP.

Dans cet exemple, le site à protéger SAP est équipé d'un système de détection S qui est configuré pour détecter un appareil volant dans un espace aérien EA défini autour du site à protéger SAP. Le système de détection S est également configuré pour intercepter l'appareil volant comme cela sera présenté par la suite.

En référence à la figure 2, le système de détection S comprend une station au sol 1 et plusieurs drones de suivi 2. Dans cet exemple, par souci de clarté et de concision, il ne va être présenté qu'un unique drone de suivi 2.

En référence à la figure 1, il est représenté de manière schématique une station au sol 1 selon une forme de réalisation de l'invention.

La station au sol 1 comporte un centre de commandement comprenant au moins un calculateur 10, en particulier un serveur ou un ordinateur, équipé d'un dispositif d'affichage sur lequel au moins un opérateur peut observer de potentielles menaces.

La station au sol 1 comporte un dispositif de surveillance 11 configuré pour détecter une position d'au moins un intrus, par exemple un appareil volant, dans l'espace aérien EA, désignée ci-après « position cible PosC ». De manière préférée, le dispositif de surveillance 11 se présente sous la forme d'un radar longue portée permettant de déterminer jusqu'à 2000 mètres la position cible PosC. Il va de soi que le dispositif de surveillance 11 pourrait se présenter sous une autre forme, par exemple, une association de systèmes de goniomètres pour déterminer la position de la cible par triangulation, ou bien tout autre capteur au sol permettant de déterminer la position de la cible. La position cible PosC est déterminée à longue portée et est transmise au calculateur 10 afin d'avertir de manière réactive un opérateur qu'un intrus est présent.

Toujours en référence à la figure 1, la station au sol 1 comporte un dispositif d'acquisition vidéo 12, relié au calculateur 10, pour permettre à l'opérateur de visualiser l'intrus et permettre sa classification, c'est-à-dire déterminer si l'intrus est par exemple un appareil volant ou bien un animal. En pratique, la classification à longue portée est simple lorsque l'intrus est de grandes dimensions. Dans cet exemple, le dispositif d'acquisition vidéo 12 est une caméra d'acquisition vidéo, en particulier, une caméra infrarouge. Il va de soi qu'une caméra captant dans le spectre visible pourrait également être utilisée. De plus, il est possible de mettre en oeuvre un procédé de traitement d'image en direct sur le flux vidéo acquis, afin de déterminer la position de la cible et de plus amples informations utiles à l'opérateur en complément du dispositif de surveillance 11.

Toujours en référence à la figure 1, la station au sol 1 comporte également un dispositif d'interception au sol 13 pour intercepter l'intrus lorsqu'il est considéré comme une menace. Le dispositif d'interception au sol 13 est relié au calculateur 10 afin de pouvoir être commandé de manière réactive. Dans cet exemple, le dispositif d'interception au sol 13 peut comprendre un laser haute puissance, un brouilleur longue portée ou un lanceur de projectile.

Dans cet exemple, la station au sol 1 comporte en outre un dispositif de communication 14 pour communiquer avec le drone de suivi 2, par exemple, selon un lien de communication radio, de préférence, crypté.

De manière préférée, le dispositif de communication 14 met en oeuvre des communications cryptées afin d'assurer la non-compromission des données.

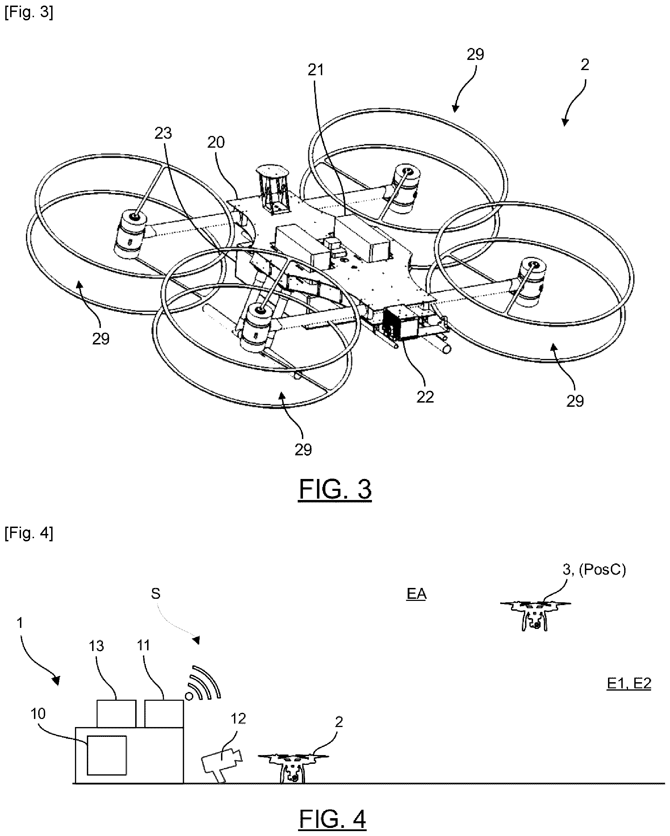

Un drone de suivi 2 est représenté de manière schématique à la figure 3. Le drone de suivi 2 comporte un châssis 20 sur lequel sont montés un ou plusieurs organes de propulsion 29, par exemple, des moteurs électriques équipés d'hélice. Il va de soi que le drone de suivi 2 pourrait comprendre toute sorte d'organes de propulsion 29.

Dans cette forme de réalisation, toujours en référence à la figure 3, le drone de suivi 2 comprend un module de navigation 21, un dispositif de détection 22, un dispositif d'interception 23, un dispositif de capture d'image, non représenté, et un module de communication, non représenté, pour communiquer avec la station au sol 1. Le drone de suivi 2 comporte en outre une batterie électrique, pour alimenter les différents équipements du drone de suivi (les organes de propulsion 29, le module de navigation 21, le dispositif de détection 22, le dispositif d'interception 23, le dispositif de capture d'image, le module de communication, etc.).

De préférence, les communications entre la station au sol 1 et le drone de suivi 2 se font par ondes radio en 2,4 GHz.

Le drone de suivi 2 comporte un module de navigation 21 configuré pour commander les organes de propulsion 29 afin de diriger le drone de suivi 2. Dans cet exemple, le module de navigation 21 se présente sous la forme d'une carte électronique. Le module de navigation 21 est par ailleurs configuré pour déterminer en temps réel la position du drone de suivi 2, désignée ci-après « position du drone PosD ». A titre d'exemple, le module de navigation 21 comporte une centrale inertielle.

Le module de navigation 21 est configuré pour diriger de manière automatique le drone de suivi 2 vers une position donnée, en particulier, vers une position cible PosC correspondante de celle d'un intrus ou vers la position de stockage du drone de suivi 2. Cela permet, de manière avantageuse, d'apporter une réponse immédiate dès qu'un intrus est détecté par la station au sol 1.

En référence à la figure 3, le drone de suivi 2 comporte un dispositif de détection 22, de préférence, un lidar. Un lidar permet, de manière avantageuse, de réaliser des détections d'un intrus à plusieurs dizaines de mètres et avec une très grande précision angulaire de détection. De plus, un lidar permet un balayage dense de son champs de vision et possède une masse réduite en comparaison avec d'autres types de dispositifs de détection 22, comme les radars. De préférence, le lidar possède un angle d'ouverture horizontal supérieur à 70 degrés. De préférence, le lidar possède un angle d'ouverture vertical supérieur à 70 degrés. Dans cet exemple, le lidar possède un angle d'ouverture horizontal d'environ 70 degrés et un angle d'ouverture vertical d'environ 77 degrés.

De préférence, le lidar est configuré pour déterminer un indice de réflectivité de l'intrus afin de faciliter son identification. L'utilisation d'un lidar permet notamment une vision en trois dimensions du champs de détection, offrant une plus grande précision et des mesures de distance, de vitesses et d'accélérations selon trois axes, ci-après « vecteur de détection Vd ». Autrement dit, le lidar permet de déterminer et d'estimer la trajectoire de l'intrus afin de pouvoir le suivre de manière optimale comme cela sera présenté par la suite. De manière préférée, le lidar est monté dans une nacelle stabilisatrice, de manière à conserver une grande précision d'usage.

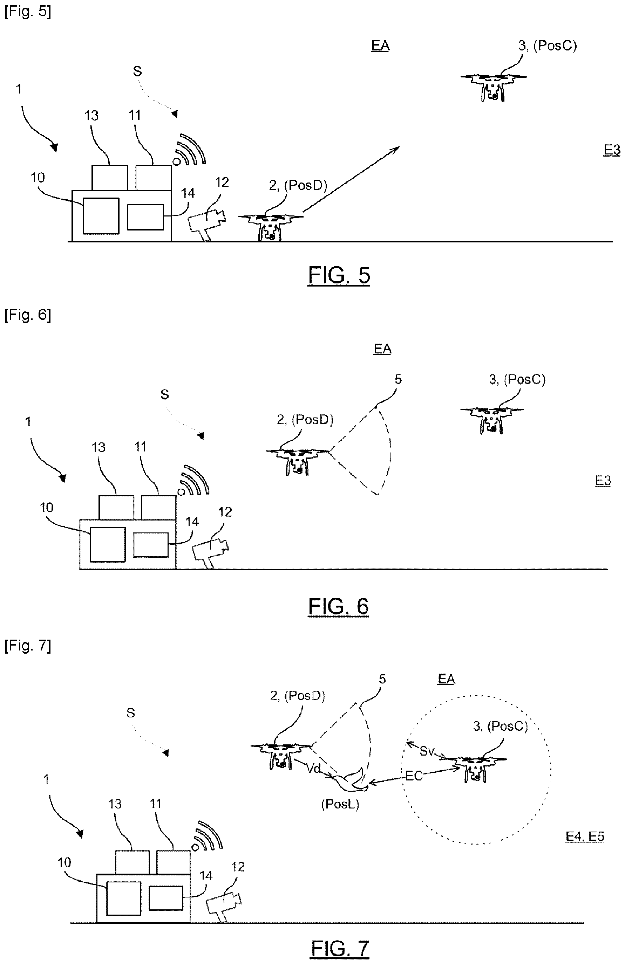

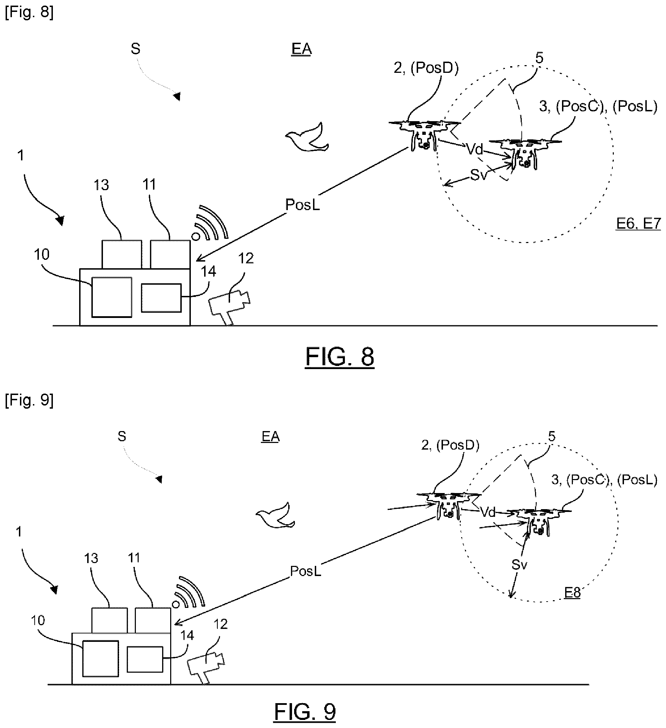

En référence aux figures 7 et 8, le dispositif de détection 22 est configuré pour détecter une position d'au moins un intrus, désignée ci-après « position locale PosL », par exemple un appareil volant ou un oiseau, dans un voisinage du drone de suivi 2. De manière préférée, la position locale PosL est déterminée à partir de la position du drone de suivi PosD et du vecteur de détection Vd mesuré par le dispositif de détection 22, en particulier, par le lidar. Grâce au vecteur de détection Vd, en particulier sa longueur, le drone de suivi 2 peut adapter sa course pour suivre l'intrus de manière réactive tout en conservant une distance de sécurité prédéterminée. Ainsi, le drone de suivi 2 peut suppléer ou se substituer à la station au sol 1 pour déterminer la position de l'intrus.

Le module de navigation 21 est configuré pour déterminer une distance d'écartement EC entre la position locale PosL et la position cible PosC, et la comparer à un seuil de voisinage Sv. Cela permet, de manière avantageuse, de déterminer automatiquement si l'intrus détecté par le dispositif de détection 22 du drone de suivi 2 correspond à l'intrus détecté par le dispositif de surveillance 11 de la station au sol 1. En cas de correspondance, le drone de suivi 2 démarre le suivi de l'intrus, à défaut, il poursuit son déplacement vers la position cible PosC, en particulier, en évitant l'intrus qu'il a précédemment détecté.

En référence à la figure 3, le drone de suivi 2 comporte un dispositif de capture d'images, en particulier une caméra vidéo, configuré pour transmettre en continu les images capturées à la station au sol 1, en particulier, au calculateur 10 équipé de son dispositif d'affichage. Cette caméra embarquée à bord du drone de suivi 2 permet, de manière avantageuse, d'obtenir des images avec une grande résolution de l'intrus du fait de la proximité du drone de suivi 2 avec l'intrus. Cela permet, de manière avantageuse, à un opérateur dans la station au sol 1 d'identifier l'appareil volant, de déterminer notamment son modèle et si ce dernier est un ennemi. De plus, des algorithmes de traitement d'images peuvent avantageusement être utilisés sur les images capturées réceptionnées par la station au sol 1 afin de déduire des données supplémentaires utiles à l'opérateur.

En référence à la figure 3, le drone de suivi 2 comporte un dispositif d'interception 23 qui est monté sur le châssis 20, afin d'intercepter l'appareil volant. Autrement dit, le dispositif d'interception 23 est embarqué. De préférence, le dispositif d'interception 23 est un laser, un brouilleur à faible portée ou un effecteur cinétique tel qu'un filet ou un projectile. Cela permet au drone de suivi 2, de manière avantageuse, d'intercepter l'appareil volant sans dégât collatéral de manière locale comme cela sera présenté par la suite.

Le dispositif d'interception 23 est configuré pour recevoir un ordre d'interception transmis par la station au sol 1, et intercepter l'appareil volant uniquement en cas de réception de l'ordre d'interception OI. Lorsque l'intrus est identifié comme un ennemi, l'opérateur peut ainsi décider d'envoyer, l'ordre d'interception au dispositif d'interception au sol 13 de la station au sol 1 ou au dispositif d'interception 23 du drone de suivi 2.

En référence aux figures 4 à 10, il est représenté un exemple de mise en oeuvre d'un procédé de détection selon l'invention.

Dans cet exemple de mise en oeuvre, en référence à la figure 4, le drone de suivi 2 est en position de stockage au sol et prêt à intervenir.

En référence à la figure 4, le procédé comprend une étape consistant à détecter E1, par la station au sol 1, une position d'un intrus dans l'espace aérien EA, ci-après « position cible PosC ». Cette détection est réalisée à longue portée par le dispositif de surveillance 11 de la station au sol 1. Dans cet exemple, l'intrus est un appareil volant 3 qui est identifié visuellement par le dispositif d'acquisition vidéo 12. Dans cet exemple, cette étape de détection ne permet pas de déterminer si l'appareil volant 3 est un ami ou un ennemi.

Toujours en référence à la figure 4, le procédé comprend une étape consistant à transmettre E2, par la station au sol 1, la position cible PosC au drone de suivi 2 via leurs modules de communication. De préférence, la position cible PosC est détectée et transmise au drone de suivi 2 de manière continue.

En référence aux figures 5 et 6, le procédé comprend une étape consistant à déplacer E3 de manière automatique le drone de suivi 2 vers la position cible PosC. Autrement dit, le drone de suivi 2 permet de rallier l'appareil volant 3. De manière préférée, au cours du ralliement, le dispositif de détection 22 du drone de suivi 2 demeure activé et détecte en continu tout intrus entrant dans une zone de détection 5 déterminée par le dispositif de détection 22 (lidar) comme illustré à la figure 8.

Lors du ralliement, le procédé comprend une étape consistant à détecter E4, par le drone de suivi 2, la position locale PosL de tout intrus dans la zone de détection 5 du drone de suivi 2. Dans cet exemple, la position locale PosL est déterminée à partir de la position du drone de suivi PosD (fournie par le module de navigation 21) et du vecteur de détection Vd mesuré par le lidar (dispositif de détection 22). Dans cet exemple, le vecteur de détection Vd comprend les vitesses et/ou accélérations de l'intrus selon les différents axes.

De préférence, au cours du ralliement, le procédé comprend une étape E5 consistant à comparer la distance d'écartement EC, déterminée entre la position locale PosL et la position cible PosC, au seuil de voisinage Sv de manière à déterminer si l'intrus détecté correspond à l'appareil volant 3. A titre d'exemple, en référence à la figure 7, l'intrus est un oiseau qui est ignoré par le drone de suivi 2.

En référence à la figure 8, l'intrus correspond à l'appareil volant 3 et la position locale PosL correspond à celle de l'appareil volant 3.

Le procédé comprend une étape consistant à transmettre E6, par le drone de suivi 2, la position locale PosL à la station au sol 1 et à déterminer E7, par la station au sol 1, une position affinée PosA à partir de la position cible PosC et de la position locale PosL, comme représenté en figure 8.

De manière avantageuse, la station au sol 1 permet de déterminer une position affinée PosA de grande précision par fusion de la position cible PosC et de la position locale PosL. De préférence, la position affinée PosA est déterminée à partir de la position cible PosC, de la position locale PosL et de la position du drone PosD. Selon un aspect, la position affinée PosA correspond à la position locale PosL.

L'obtention d'une telle position affinée PosA présente de nombreux avantages. Celle-ci peut être utilisée avec une grande confiance pour afficher la position de l'appareil volant 3 sur le dispositif d'affichage du calculateur 10, notamment, associée à la position du drone PosD. Cela permet une surveillance réactive et continue par l'opérateur

Cela permet en outre de fournir une position affinée PosA au dispositif d'interception au sol 13 pour réaliser une interception ciblée.

Dans cet exemple, le procédé comprend une étape de poursuite E8 consistant à déplacer de manière automatique le drone de suivi 2 en fonction de la position locale PosL, de préférence, sans tenir compte de la position cible PosC. Lors de cette étape, le drone de suivi 2 poursuit l'appareil volant 3, à partir de la position locale PosL et du vecteur de détection Vd tout en maintenant une distance de sécurité avec l'appareil volant 3. Cela permet au drone de suivi 2, de manière avantageuse, de poursuivre l'appareil volant 3, même en cas de dysfonctionnement du dispositif de surveillance 11 de la station au sol 1.

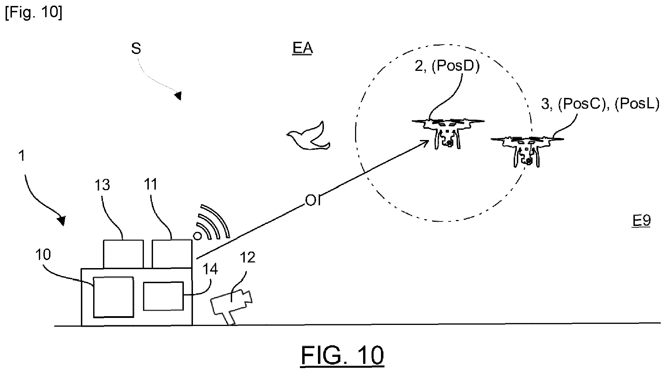

De préférence, le procédé comprend une étape consistant à commander E9 le dispositif d'interception 23 du drone de suivi 2 de manière à ce qu'il cible l'appareil volant 3 à la position locale PosL. Dans cet exemple, en référence à la figure 10, le drone de suivi 2 réalise une interception avec un brouilleur faible portée qui permet d'interdire toute commande de l'appareil volant 3 à distance. L'appareil volant 3 est en position de sécurité et se maintient en suspension et ne peut plus se rapprocher du site à protéger SAP. Le brouilleur faible portée peut également pirater l'appareil volant 3 afin de forcer son atterrissage. Un tel brouilleur faible portée permet d'éviter toute collatéralité.

Le drone de suivi 2 peut également réaliser une interception destructrice de manière ciblée, par exemple, au moyen d'un laser. Une interception ciblée à faible distance est plus fiable. Une fois l'interception réalisée, le drone de suivi 2 peut retourner à sa zone de stockage, en particulier, de manière automatique.

## Revendications

1. Système de détection (S) d'un appareil volant (3) dans un espace aérien (EA), le système de détection (S) comprenant au moins une station au sol (1) et au moins un drone de suivi (2),
- la station au sol (1) étant configurée pour :
• détecter une position d'au moins un appareil volant (3) dans l'espace aérien (EA), ci-après « position cible » (PosC),
• transmettre la position cible (PosC) au drone de suivi (2),
- le drone de suivi (2) étant configuré pour se déplacer de manière automatique vers la position cible (PosC), le drone de suivi (2) comportant un lidar,
- le drone de suivi (2) étant configuré pour :
• mesurer au moyen du lidar un vecteur de détection (Vd) d'au moins un appareil volant (3) dans un voisinage (5) du drone de suivi (2), le vecteur de détection (Vd) comprenant des mesures de distance, de vitesses et d'accélérations selon trois axes
• détecter la position du au moins un appareil volant (3) dans, ci-après « position locale » (PosL), à partir de la position (PosD) du drone de suivi (2) et du vecteur de détection (Vd),
• transmettre la position locale (PosL) à la station au sol (1),
- la station au sol (1) étant configurée pour :
• déterminer une position affinée (PosA) à partir de la position locale (PosL).

2. Système selon la revendication 1, dans lequel la station au sol (1) comprend un dispositif de surveillance (11) pour détecter la position cible (PosC), en particulier, un radar longue portée.

3. Système selon la revendication 1, dans lequel le lidar (22) possède un angle d'ouverture horizontal supérieur à 70 degrés et un angle d'ouverture vertical supérieur à 70 degrés.

4. Système selon l'une des revendications 1 à 3, dans lequel le drone de suivi (2) comporte un dispositif de capture d'images configuré pour transmettre en continu les images capturées (Im) à la station au sol (1).

5. Système selon l'une des revendications 1 à 4, comportant un dispositif d'interception (23), afin d'intercepter l'appareil volant (3) à la position affinée (PosA).

6. Système selon la revendication 5, dans lequel le dispositif d'interception (23) est monté sur le drone de suivi (2).

7. Procédé de détection d'un appareil volant (3) dans un espace aérien (EA) par un système de détection (S) selon l'une des revendications 1 à 6, le système de détection (S) comprenant au moins une station au sol (1) et au moins un drone de suivi (2), le procédé comprenant des étapes consistant à :
- Détecter (E1), par la station au sol (1), une position d'au moins un appareil volant (3) dans l'espace aérien (EA), ci-après « position cible » (PosC),
- Transmettre (E2), par la station au sol (1), la position cible (PosC) au drone de suivi (2),
- Déplacer (E3) de manière automatique le drone de suivi (2) vers la position cible (PosC),
- Mesurer au moyen du lidar un vecteur de détection (Vd) d'au moins un appareil volant (3) dans un voisinage (5) du drone de suivi (2), le vecteur de détection (Vd) comprenant des mesures de distance, de vitesses et d'accélérations selon trois axes
- Détecter (E4) la position du au moins un appareil volant (3) dans, ci-après « position locale » (PosL), à partir de la position (PosD) du drone de suivi (2) et du vecteur de détection (Vd),
- Transmettre (E6), par le drone de suivi (2), la position locale (PosL) à la station au sol (1), et
- Déterminer (E7), par la station au sol (1), une position affinée (PosA) à partir de la position locale (PosL).

8. Procédé selon la revendication 7, comprenant une étape consistant à commander (E9) un dispositif d'interception (13, 23) de manière à ce qu'il cible l'appareil volant (3) à la position affinée (PosA).

9. Procédé selon l'une des revendications 7 à 8, dans lequel la position affinée (PosA) est affichée sur un écran d'affichage de la station au sol (1).

10. Procédé selon l'une des revendications 7 à 9, dans lequel une position (PosD) du drone de suivi (2) est déterminée en continu par le drone de suivi (2), et envoyée à la station au sol (1).

11. Procédé selon l'une des revendications 7 à 10, dans lequel la position affinée (PosA) est déterminée à partir de la position cible (PosC) et de la position locale (PosL).

12. Procédé selon l'une des revendications 7 à 11, dans lequel la position cible (PosC) est détectée et transmise au drone de suivi (2) de manière continue.

13. Procédé selon l'une des revendications 7 à 12, comprenant une étape (E5) consistant à comparer une distance d'écartement (EC), déterminée entre la position locale (PosL) et la position cible (PosC), à un seuil de voisinage (Sv), le drone de suivi (2) transmettant (E6) la position locale (PosL) uniquement si la distance d'écartement (EC) est inférieure au seuil de voisinage (Sv).

14. Procédé selon l'une des revendications 7 à 13, comprenant une étape de poursuite (E8) consistant à déplacer de manière automatique le drone de suivi (2) en fonction de la position locale (PosL) et du vecteur de détection (Vd) défini entre le drone de suivi (2) et l'appareil volant (3), de préférence, sans tenir compte de la position cible (PosC).
